Europäisches Patentamt

European Patent Office

Office européen des brevets

(11) Veröffentlichungsnummer: **0 238 796**
**A2**

(12) **EUROPÄISCHE PATENTANMELDUNG**

(21) Anmeldenummer: 87100835.5

(22) Anmeldetag: 22.01.87

(51) Int. Cl.⁴: **B29C 47/92** , G05D 24/02

(30) Priorität: 26.03.86 DE 3610159

(43) Veröffentlichungstag der Anmeldung:
30.09.87 Patentblatt 87/40

(84) Benannte Vertragsstaaten:
DE FR GB IT NL

(71) Anmelder: **Werner & Pfleiderer GmbH**
**Theodorstrasse 10 Postfach 30 12 20**
**D-7000 Stuttgart 30(DE)**

(72) Erfinder: **Fritz, Hans-Gerhard, Prof. Dr.-Ing.,**
**Dipl.-Ing.**
**Gotenweg 10**
**D-7336 Uhingen(DE)**
Erfinder: **Herrmann, Heinz, Dipl.-Ing.**
**Ferdinand-Hanauer-Strasse 80**
**D-7000 Stuttgart 50(DE)**
Erfinder: **Nettelnbreker, Hans-Jürgen,**
**Dipl.-Ing.**
**Kornwestheimerstrasse 5**
**D-7140 Ludwigsburg-Ossweil(DE)**
Erfinder: **Ocker, Herbert, Dr.-Ing., Dipl.-Ing.**
**Feuerbacher Strasse 38**
**D-7250 Leonberg(DE)**
Erfinder: **Stöhrer, Bernhard**
**Klemmertstrasse 17**
**D-7038 Holzgerlingen(DE)**

(74) Vertreter: **Rau, Manfred, Dr. Dipl.-Ing. et al**
**Rau & Schneck, Patentanwälte Königstrasse**
**2**
**D-8500 Nürnberg 1(DE)**

(54) **Vorrichtung und Verfahren zur Herstellung eines Kunststoffes mit definierten Eigenschaften, insbesondere eines Polypropylens mit definierter Molekularstruktur.**

(57) Die Erfindung betrifft eine Vorrichtung und ein Verfahren zur Herstellung eines Kunststoffes, insbesonders eines Polypropylens mit definierter Molekularstruktur, wobei ein Polymer einem Extruder zusammen mit zumindest einer weiteren, mit dem Polymer chemisch reagierenden Komponente, insbesondere Peroxid zugeführt wird. Dem Extruder (1) ist eine von einer Produktleitung (29) abzweigende Probenentnahmeleitung (32) nachgeordnet, welche einen Probenstrom des extrudierten Produkts zu einem Rheometer (33) führt. Dort wird die Viskosität ermittelt. Aus den Viskositätswerten wird über abgespeicherte Kalibrierungsdaten in einem Rechner (37) die rheologische Kenngröße, z.B. der Schmelzindex, bestimmt. Über eine Regeleinrichtung wird das Dosierungsverhältnis erforderlichenfalls so geändert, daß die gewünschte rheologische Kenngröße konstant gehalten wird.

FIG. 2

## Vorrichtung und Verfahren zur Herstellung eines Kunststoffes mit definierten Eigenschaften, insbesondere eines Polypropylens mit definierter Molekularstruktur

Die Erfindung richtet sich auf eine Vorrichtung nach dem Oberbegriff von Anspruch 1 und ein Verfahren nach dem Oberbegriff von Anspruch 4.

Eine derartige Vorrichtung bzw. ein derartiges Verfahren ist aus der DE-AS 17 20 543 bekannt. Bei dem vorbekannten Verfahren wird das Polypropylen mit Luft oder einem anderen Sauerstoff-Inertgas-Gemisch in einer ersten Zone eines Extruders gemischt und erhitzt, wobei die Temperatur in dieser ersten Zone dadurch geregelt wird, daß dem ausgetragenen Produktstrom ein Probenstrom entnommen wird, dessen Schmelzelastizität über ein Rheometer bestimmt wird, welches wiederum über einen Regler die Heizung in dieser ersten Zone ansteuert.

Bei diesem vorbekannten Verfahren handelt es sich un ein Verfahren zum oxidativ-thermischen Abbau von Polypropylen, wobei sich bei dieser langsamen Regelung Langzeitschwankungen ergeben, so daß das abgebaute Polypropylen hohen Qualitätsanforderungen nicht gerecht wird.

Aus der DE-PS 27 51 225 ist ein thermomechanischer Abbau des Polypropylens bekannt, wobei ebenfalls der Schmelzindex eines Probenstroms gemessen wird und über eine Regeleinrichtung eine Drossel mit veränderbarem Durchlaßquerschnitt angesteuert wird. Diese Regelung erfolgt über einen Zweikoordinatenregler, wobei als Regler-Kennlinie die Temperatur-Druck-Kennlinie bei Betrieb der Dosierpumpe mit konstanter Fördermenge bzw. die Temperatur-Fördermengen-Kennlinie bei Betrieb. mit konstantem Druckabfall herangezogen wird.

Gegenüber diesen vorbekannten Verfahren geht die Erfindung von der Erkenntnis aus, daß durch einen im wesentlichen chemischen Abbau des Polypropylens oder eines vergleichbaren Kunststoffes ein Endprodukt mit sehr konstanter, gut reproduzierbarer Qualität erzielt wird. Bei einem derartigen chemischen Abbauen, z.B. von Polypropylen auf Extrudern, wird neben dem Polymer eine mit diesem chemisch reagierende Komponente, z.B. Peroxid, in die Maschine dosiert, die eine gezielte Reaktion zur Veränderung der Molekularstruktur bewirkt, was sich wiederum im Fließverhalten der Kunststoffschmelze niederschlägt. Dabei besteht ein direkter Zusammenhang zwischen der Viskosität des abgebauten Kunststoffs und der zudosierten Menge der chemisch aktiven Komponente, also z.B. zwischen Polypropylen und Peroxid.

Die Qualitätskontrolle bei bisher angewandten industriellen Verfahren des chemischen Abbaus erfolgt so, daß der Schmelzindex einer nach der Granulierung manuell entnommenen Probe im Labor gemessen wird. Weicht der gemessene Schmelzindex von dem angestrebten Wert ab, so wird das Verhältnis der Dosierströme zwischen der chemisch aktiven Komponente und dem Polymer manuell und entsprechend der Erfahrung der jeweiligen Bedienungsperson korrigiert. Aufgrund der zeitraubenden Labormessung können mit dieser Vorgehensweise Störungen, die z.B. durch Chargenunterschiede verursacht werden, nur langfristig erkannt und je nach dem individuellen Geschick kompensiert werden. Dies hat zur Folge, daß der Anteil an der Vorgabe nicht gerechtwerdenden Produkt in der Größenordnung von 5 bis 10% liegt. Außerdem führen solche nicht rechtzeitig erkannten Viskositätsschwankungen bei Viskositätseinbrüchen zu gravierenden Störungen beim Betrieb der Granuliervorrichtung, wobei diese Störungen oft zu deren Ausfall und damit zum Stillstand der gesamten Produktionsstraße führen.

Insbesondere für die Herstellung von Polypropylen-Spinnfasern werden Qualitäten gefordert, die eine Schwankungsbreite der Viskosität innerhalb eines Toleranzbereiches von ± 2,5% verlangen. Um dies zu erreichen, ist auch versucht worden, in einer Vorstufe mittels mehrerer Mischsilos, sogenannter Homogenisiersilos ein einheitliches Polymer in Pulver form als Ausgangsmaterial zu erreichen, so daß Schwankungen im Ausgangsmaterial möglichst vermieden werden. Darüber hinaus werden auch Mischsilos zur nachträglichen Homogenisierung des produzierten Granulats eingesetzt. Beide Maßnahmen sind sehr aufwendig.

Hiervon ausgehend liegt der Erfindung die Aufgabe zugrunde, ein Verfahren und eine Vorrichtung zu entwickeln, wodurch es möglich wird, die Vorteile des chemischen Abbaus eines Polymers für eine Produktion in industriellen Maßstäben auszunutzen und dabei eine von Störgrößen möglichst unabhängige, gleichbleibende Produktqualität zu erhalten.

Diese Aufgabe wird gelöst durch eine Vorrichtung gemäß dem kennzeichnenden Teil von Anspruch 1. Erfindungsgemäß wurde erkannt, daß durch eine Regelung des Dosierungsverhältnisses von Polymer und der mit diesem regaierenden Komponente in Abhängigkeit von der Viskosität eine äußerst konstante, von Störgrößen unabhängige Produktqualität erzielt wird, welche durch die Fließeigenschaften des Produkts charakterisiert ist.

Gemäß Anspruch 2 ist vorgesehen, daß der Probenentnahmeleitung eine Heizeinrichtung zugeordnet ist. Hierdurch kann der Probenstrom auf eine vorgegebene Prüftemperatur gebracht werden. Grundsätzlich wäre es auch möglich, auf eine solche Erwärmung oder Abkühlung auf eine definierte Meßtemperatur zu verzichten und stattdessen eine rechnerische Korrektur des Viskositätswertes vorzunehmen, was jedoch zu ungenaueren Ergebnissen führt.

Die der Erfindung zugrundeliegende Aufgabe wird insbesondere gelöst durch eine Verfahren gemäß Anspruch 3.

Die Ansprüche 4 und 5 geben vorteilhafte Ausgestaltungen des erfindungsgemäßen Verfahrens an.

Weitere Merkmale, Vorteile und Einzelheiten der Erfindung ergeben sich aus der folgenden Beschreibung eines bevorzugten Ausführungsbeispieles anhand der Zeichnung. Dabei zeigen

Fig. 1 einen schematischen Schnitt durch einen an sich bekannten Extruder zum chemischen Abbau eines Polymers und

Fig. 2 eine blockschaltbildartige Darstellung der erfindungsgemäßen, dem in Fig. 1 dargestellten Extruder zugeordneten Bauteile.

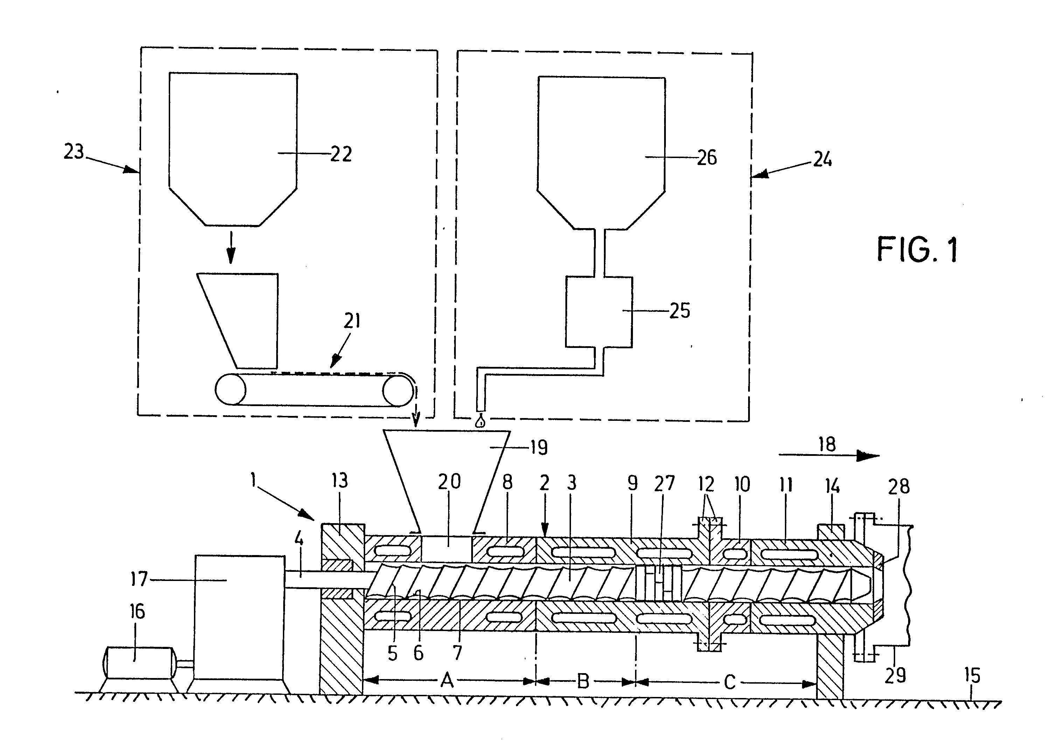

Bei dem in Fig. 1 im vertikalen Längsschnitt vereinfacht dargestellten Schneckenextruder 1 ist in einem Gehäuse 2 eine Schnecke 3 angeordnet. Diese besteht aus einer Schneckenwelle 4, auf der schraubenlinienförmig verlaufende Schneckenwindungen 5 angebracht sind, zwischen denen sich Schneckengänge 6 befinden. Die Schnecke 3 ist in einer Schneckenbohrung 7 des Gehäuses 2 derart angeordnet, daß die Schneckenwindungen 5 nur ein geringes Laufspiel gegenüber der Innenwandung des Gehäuses 2, also gegenüber der Wand der Schneckenbohrung 7 aufweisen. Das Gehäuse 2 besteht aus einzelnen, als Gehäuseschüsse bezeichneten Abschnitten 8, 9, 10, 11, die jeweils mittels zugeordneter Flansche 12 (von denen nur diejenigen zwischen den Abschnitten 9 und 10 dargestellt sind) miteinander axial fluchtend zusammengeschraubt sind. Das daraus sich ergebende gesamte Gehäuse 2 ist über im Bereich seiner beiden Enden angeordnete Ständer 13, 14 auf einem Fundament 15 abgestützt. Die Schnecke 3 wird von einem Motor 16 über ein Untersetzungsgetriebe 17 angetrieben.

An dem in Förderrichtung 18 ersten Abschnitt 8 ist ein Materialzuführtrichter 19 angeordnet, der über eine Einzugsöffnung 20 mit der Schneckenbohrung 7 verbunden ist. Dem Materialzuführtrichter 19 wird von einem Bunker 22 über eine Dosiereinrichtung 21, welche eine erste Zugabeeinrichtung 23 bilden, ein Polymer zugeführt und über eine zweite Zugabeeinrichtung 24 umfassend eine Durchflußregeleinrichtung 25 und einen Behälter 26 als mit dem Polymer chemisch reagierende Komponente ein Peroxid in flüssiger Form.

Die Zugabeeinrichtungen 23, 24 sind vorstehend nur beispielhaft beschrieben und können auch durch andere Zugabeeinrichtungen, welche eine veränderbare Dosierung ermöglichen, ersetzt werden. Auch der vorstehend beschriebene mechanische Aufbau des Schneckenextruders 1 ist für die Erfindung nicht wesentlich, da zwar dem chemischen Abbau in gewissem Umfang ein thermomechanischer Abbau des Polymers überlagert ist, wobei dieser aber einen relativ unbedeutenden Anteil einnimmt.

Durch der ersten Abschnitt 8 des Schneckenextruders 2 wird eine Einzugszone A gebildet, von der das Material einer Druckaufbau-und Plastifizierzone B im nächstfolgenden Abschnitt 9 zugeführt wird, der noch im selben Abschnitt 9 eine Knetzone C nachgeschaltet ist. In dieser sind auf der Schneckenwelle 4 Knetscheiben 27 angebracht, mittels derer das zu behandelnde Material besonders intensiv geknetet wird.

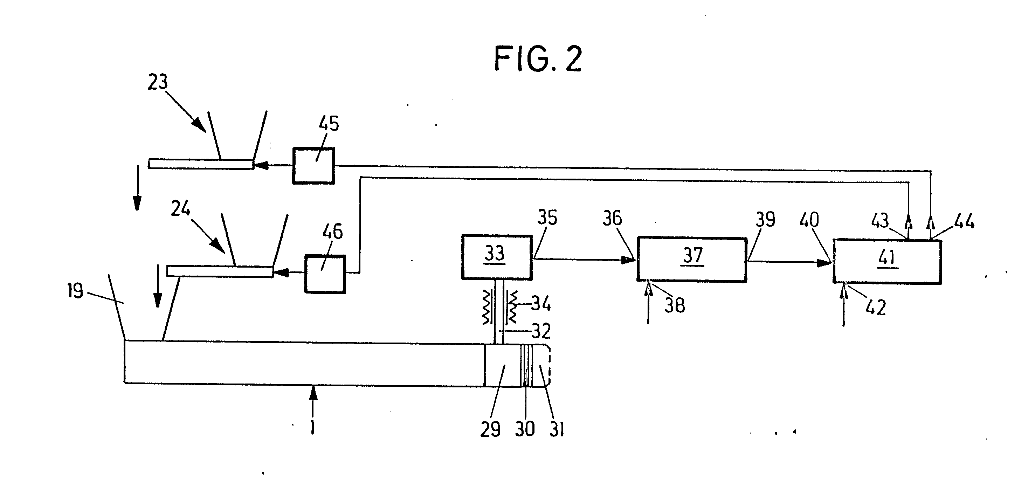

Dem in Förderrichtung 18 letzten Abschnitt 11 mit dem Auslaßende 28 des Schneckenextruders 1, in dem die Schnecke 3 endet, ist eine Produktaustragsleitung 29, welche in Fig. 1 nur schematisch dargestellt ist, sowie eine Siebanordnung 30 und eine Düsenplatte 31 zum Austrag von Schmelzsträngen nachgeordnet. Von der Produktaustragsleitung 29 zweigt eine Probenentnahmeleitung 32 ab, welche in Fig. 2 nur schematisch dargestellt ist.

Die Probenentnahmeleitung 32 führt zu einem Rheometer 33, d.h. zu einer Einrichtung zur Messung der Viskosität der Schmelze. Derartige Rheometer sind kommerziell erhältlich (z.B. Firma Rheometrics). Um den Probenstrom auf eine definierte Prüftemperatur zu bringen, ist der Probenentnahmeleitung 32 eine Heiz-Kühleinrichtung 34 zugeordnet. Ein Ausgang 35 des Rheometers 33 ist mit einem Eingang 36 eines Rechners 37 verbunden. Über einen Eingang 38 werden dem Rechner 37 abgespeicherte Kalibrierdaten eingegeben. Der Ausgang 39 des Rechners 37 ist mit dem Eingang 40 einer Regeleinrichtung 41 verbunden, über deren Eingang 42 ein Regel-Sollwert eingegeben wird. Die Ausgänge 43, 44 der Regeleinrichtung 41 sind mit den Zugabeeinrichtungen 23 bzw. 24 zugeordneten Stelleinrichtungen 45, 46 verbunden.

Ausgehend von einem Zustand, in welchem die gesamte Vorrichtung im Betrieb ist, arbeitet diese wie folgt:

Zur Herstellung von Polypropylen mit einer definierten Molekularstruktur, welche mit dem Fließverhalten der Produktschmelze korreliert ist, wird über die Zugabeeinrichtung 23 Polypropylen und über die Zugabeeinrichtung 24 Peroxid bzw. Polymer vorgemischt mit Peroxid zugegeben. Diese Komponenten gelangen über den Trichter 19 in den Schneckenextruder 1. Die Zugabe einer Vormischung eines Peroxid enthaltenden Gemisches mit anderen Komponenten, ein sogenanntes Mastermix, anstatt Peroxid hat der Vorteil, daß beim Arbeiten mit kleineren Mengendurchsätzen keine Probleme mit der geregelten Zugabe von Peroxid entstehen.

Das in den Schneckenextruder 1 gelangende Polypropylen bzw. das Peroxid enthaltende Gemisch werden in der Plastifizierzone bei ca. 170 bis 240°C aufgeschmolzen, wobei die Abbaureaktion eintritt. Der chemische Abbau erfolgt dementsprechend bei erheblich niedrigeren Temperaturen wie beim thermomechanischen Abbau, für welchen 300 bis 350°C erforderlich sind. Dies bedeutet, daß - wie bereits erwähnt -der thermomechanische Abbau bei der auftretenden Temperatur relativ gering ins Gewicht fällt.

Grundsätzlich ist allerdings eine gezielte Überlagerung des thermomechanischen Abbaus denkbar, wobei der durch den überlagerten thermomechanischen Abbau bedingte Wert mit erfaßt wird. So kann - wie in Fig. 2 schematisch angedeutet - unmittelbar an der Austrag eine Düsenplatte angeschlossen sein, durch welche die Schmelzstränge abgezogen werden, um anschließend granuliert zu werden. Der Austrag kann aber auch mit einem Formkopf ausgebildet sein, aus dem das Fertigprodukt z.B. als Folie oder Spinnfaser direkt abgezogen werden kann. Durch die erzielte hohe Produktqualität bedarf es in jedem Fall keiner zusätzlichen Nachbehandlung, z.B. keiner Nachhomogenisierung des Granulats.

Von dem in der Produktleitung 29 ausgetragenen Produktstrom wird über die Probenentnahmeleitung 32 ein Probenstrom entnommen, welcher mittels der Heiz-bzw. Kühleinrichtung 34 auf eine gewünschte Prüftemperatur gebracht und dem Rheometer 33 zugeführt wird. In dem Rheometer 33 wird die Viskosität bei vorgegebener Schergeschwindigkeit ermittelt und dem Rechner 37 zugeführt. Der Rechner 37 ermittelt über die eingegebenen Kalibrierdaten nach einer vorher empirisch bestimmten Abhängigkeit aus dem Viskositätswert den aktuellen Schmelzindex oder einer anderen rheologischen Kenngröße. Die so ermittelte Kenngröße wie z.B. der Schemlzindex wird der Regeleinrichtung 41 als Ist-Wert zugeführt und mit dem vorgegebenen Sollwert, welcher die gewünschte Molekularstruktur des Fertigprodukts charakterisiert, verglichen. Je nach festgestellter Abweichung wird über die Stelleinrichtungen 45, 46 das Dosierverhältnis in den Zugabeeinrichtungen 23, 24 unter Aufrechterhaltung einer gleichbleibenden Gesamtdosierung verändert, d.h. bei einer Überschreitung des vorgegebenen Sollwertes wird die Peroxid-Zugabe vermindert und bei einer Unterschreitung des vorgegebenen Sollwertes die Peroxid-Zugabe erhöht.

## Ansprüche

1. Vorrichtung zur Herstellung eines Kunststoffes mit definierten Eigenschaften, insbesondere eines Polypropylens mit definierter Molekularstruktur, wobei ein Polymer einem Extruder zusammen mit zumindest einer weiteren, mit dem Polymer chemisch reagierenden Komponente, insbesondere Peroxid, zugeführt wird und dem Extruder eine von der Produktleitung abzweigende Probenentnahmeleitung mit einem Rheometer zur Bestimmung der Viskosität (z.B. über den Schmelzindex) nachgeordnet ist, wobei das Rheometer mit einer Regeleinrichtung verbunden ist, um die durch das Rheometer ermittelten Meßwerte dieser als Ist-Wert-Eingabe zuzuführen, und wobei der Regeleinrichtung eine Stelleinrichtung nachgeordnet ist, <u>dadurch gekennzeichnet, daß</u> die Stelleinrichtung (45, 46) auf wenigstens eine Zugabeeinrichtung (23, 24) für die Zugabe des Polymers und/oder der zumindest einen mit diesem reagierenden chemischen Komponente in Abhängigkeit von der gemessenen Viskosität bzw. des daraus errechneten Schmelzindex und den entsprechenden Vorgabewerten wirkt.

2. Vorrichtung nach Anspruch 1, <u>dadurch gekennzeichnet, daß</u> der Probenentnahmeleitung (32) eine Heiz-und/oder Kühleinrichtung (34) zugeorndet ist.

3. Verfahren zur Herstellung eines Kunststoffes mit definierten Eigenschaften, insbesondere eines Polypropylens mit definierter Molekularstruktur, wobei ein Polymer einem Extruder zusammen mit einer weiteren, mit dem Polymer chemisch reagierenden Komponente zugeführt wird, und von der Produktleitung über eine Probenentnahmeleitung ein Produktstrom abgezweigt und einem Rheometer zugeführt wird, wobei durch das Rheometer die Viskosität des Probenstromes gemessen wird, und wobei die Meßwerte des Rheometers als Ist-Wert-Eingabe einer Regeleinrichtung zugeführt werden, welche auf wenigstens eine Stelleinrichtung wirkt, <u>dadurch gekennzeichnet, daß</u> durch die Stelleinrichtung das Verhältnis der dem Extruder zugeführten Komponenten (Polymer bzw. mindestens einer mit diesem chemisch reagierende Komponente) in Abhängigkeit von der gemessenen Viskosität bzw. einer daraus errechneten rheologischen Kenngröße (z.B. Schmelzindex) und den entsprechenden Vorgabewerten beeinflußt wird.

4. Verfahren nach Anspruch 3, dadurch gekennzeichnet, daß über das Rheometer charakteristische Punkte der Fließkurve (Viskosität) der Schmelze des Probenstromes bestimmt und der jeweilige Schmelzindex rechnerisch über abgespeicherte Kalibrierdaten ermittelt wird.

5. Verfahren nach Anspruch 3, dadurch gekennzeichnet, daß die Regelung des Dosierverhältnisses der dem Schneckenextruder zugeführten Komponenten so erfolgt, daß der Gesamtdurchsatz konstant gehalten wird.

6. Verfahren nach Anspruch 3, dadurch gekennzeichnet, daß dem Polymer vor der Zugabe in den Schneckenextruder ein bestimmter Anteil der mit dem Polymer reagierenden chemischen Komponente oder ein Gemisch mit dieser Komponente zugeführt wird.

FIG. 1

0 238 796

# FIG. 2